Europäisches Patentamt

European Patent Office

Office européen des brevets

(19)

(11) Veröffentlichungsnummer: **0 386 331**
**A2**

(12) # EUROPÄISCHE PATENTANMELDUNG

(21) Anmeldenummer: **89122502.1**

(22) Anmeldetag: **06.12.89**

(51) Int. Cl.5: **C08G 61/02**

(30) Priorität: **10.03.89 DE 3907727**

(43) Veröffentlichungstag der Anmeldung:
**12.09.90 Patentblatt 90/37**

(84) Benannte Vertragsstaaten:
**AT BE CH DE ES FR GB GR IT LI LU NL SE**

(71) Anmelder: **RÜTGERSWERKE
AKTIENGESELLSCHAFT
Mainzer Landstrasse 217
D-6000 Frankfurt am Main 1(DE)**

(72) Erfinder: **Kraemer, Manfred, Dr.
Rechtstrasse 5
D-4300 Essen 11(DE)**
Erfinder: **Omran, Jafar, Dr.
Ahornstrasse 25
D-4620 Castrop-Rauxel(DE)**
Erfinder: **Spengler, Hans, Dr.
Windmühlenberg 3
D-4716 Olfen(DE)**
Erfinder: **Stäglich, Peter, Dr.
Mommsenstrasse 12
D-4152 Kempen 1(DE)**

(54) **Hitzehärtende Harze und Verfahren zu ihrer Herstellung.**

(57) Die Erfindung betrifft ein Verfahren zur Herstellung von hitzehärtenden Harzen, durch mit Säure katalysierte Vorkondensation von mehrkernigen, aromatischen Verbindungen mit aromatischen Vernetzungsmitteln.

Als Vernetzungsmittel werden dabei phenolische Verbindungen mit mindestens zwei Hydroxymethylgruppen eingesetzt.

EP 0 386 331 A2

## Hitzehärtende Harze und Verfahren zu ihrer Herstellung

Die Erfindung betrifft neue hitzehärtende Harze mit hoher Temperaturbeständigkeit. Aus EP-A 0 196 160 sind Mischungen aus mehrkernigen, aromatischen Verbindungen, aromatischen Vernetzungsmitteln und Säuren bekannt, die beim Erhitzen duroplastische Harze bilden, wobei die gehärteten Harze eine hohe Temperaturbeständigkeit besitzen.

Ausgangsprodukte für diese Harze sind aromatische Verbindungen mit mindestens drei kondensierten Benzolringen und aromatische Verbindungen mit mindestens zwei Hydroxymethyl- oder Halogenmethylgruppen, wobei die Ausgangsverbindungen in einem ganz bestimmten Verhältnis eingesetzt werden. Die als Vernetzungsmittel benannten Verbindungen sind Aromaten mit 1 bis 4 Benzolringen wie Benzole, Naphthaline, Anthracene, Pyrene und deren Alkylderivate, die mit mindestens zwei Hydroxymethyl-oder Halogenmethylgruppen substituiert sind. Bevorzugte Verbindungen sind Xylylenglykole, insbesondere p-Xylylenglykol.

Als die Vernetzung katalysierende Säuren sind starke Säuren wie Schwefel- oder organische Sulfonsäuren, insbesondere Toluolsulfonsäure notwendig.

Die Harze gemäß EP-A 0 196 160 haben eine ausgezeichnete Temperaturbeständigkeit (bis etwa 450 °C) und zeigen gute elektrische Eigenschaften, haben aber folgende Nachteile:

Sie sind sehr dunkel, so daß sie selbst in dünner Schicht als dunkelgrün bis schwarz erscheinen. Bedingt durch die eingesetzten starken Säuren sind sie stark korrosiv. Die gehärteten Produkte haben keine Haftung auf glattem Untergrund.

Es ist daher Aufgabe der Erfindung, hellere Harze mit gleicher Temperaturbeständigkeit bereitzustellen, die aber wesentlich weniger korrosiv sind und die auch in gehärtetem Zustand auf polaren, glatten Untergründen gut haften.

Die Lösung der Aufgabe erfolgt durch Verfahren gemäß der Ansprüche 1-9, und durch Harze, die nach diesem Verfahren hergestellt werden. Die bevorzugte Anwendung dieser Harze, gegebenenfalls zusammen mit weiteren Füll- und Zusatzstoffen ist die Verwendung als hochtemperaturbeständige Beschichtung oder als Brandschutzbeschichtung.

Es wurde gefunden, daß sich mehrkernige, aromatische Verbindungen, in Anwesenheit von Säuren mit phenolischen Verbindungen, die mindestens zwei Hydroxymethylgruppen tragen, zu Harzen kondensieren lassen, die bei weiterer Temperaturbehandlung zu einem harten, temperaturbeständigen Produkt weiterhärten. Die entsprechenden Harze sind hell- bzw. mittelbraun und die ausgehärteten Produkte dunkelbraun.

Daneben aber zeigen sich zwei überraschende Effekte: Sowohl für die Herstellung der Harze als auch für ihre Härtung sind keine extrem starken Säuren notwendig. Zur Katalyse der beiden Reaktionen sind vielmehr organische Di- oder Polycarbonsäuren mit bis zu 10 C-Atomen ausreichend. Durch Einsatz dieser schwach korrodierenden Säuren als Kondensationskatalysatoren läßt sich somit die korrodierende Wirkung der Harzmischungen wesentlich reduzieren oder gar gänzlich vermeiden.

Die gehärteten Produkte haften hervorragend auf glatten, polaren Untergründen wie Metallen, Glas oder Keramik. Daher sind die erfindungsgemäßen Harze als hochtemperaturbeständige Beschichtung bestens geeignet.

Da auch die Härtung der Harze offensichtlich eine Kondensationsreaktion ist, entsteht bei der Härtung Wasser. Bei dünnen Harzschichten diffundiert das Wasser während der Härtung zur Oberfläche und verdampft, so daß eine einheitliche Schicht resultiert.

Bei dicken Beschichtungen ist die Möglichkeit der Diffusion des entstehenden Wassers nicht mehr gegeben. Es entsteht ein hochtemperaturbeständiger Schaum, der ab etwa 410-460 °C zu einer nicht brennbaren, schaumartigen Kohlenstoffmasse carbonisiert. Daher eignen sich insbesondere dicke Harzschichten ausgezeichnet als Brandschutzbeschichtungen, insbesondere auf Metallen und Holz.

Die Gebrauchseigenschaften der Harze lassen sich für beide Anwendungen in an sich bekannter Weise durch zusätzliche Abmischung mit Füll- und Zusatzstoffen wie Lösemittel, Verlaufs- oder Dispergierhilfsmittel, Pigmenten, anorganischen oder organischen Füllstoffpulver oder Fasern weiter verbessern.

Einsetzbare mehrkernige, aromatische Verbindungen sind alle aromatischen Kohlenwasserstoffe mit mindestens zwei aromatischen Ringsystemen. Beispiel hierfür sind Naphthalin, Anthracen, Phenanthren, Pyren, Chrysen, Carbazol , Dibenzofuran, Pyren, Acenaphthen, Fluoren, Napthacen, Fluoranthen, Perylen, Benzpyren, Benzperylen und deren Alkyl- oder Dialkylderivate. Die Verbindungen können einzeln oder im beliebigen Gemisch miteinander verwendet werden. Als derartige Gemische sind auch aromatenreiche Schweröle (Petroleumpeche, Steinkohlenteerpeche) oder andere im wesentlichen aromatischen Destillationsrückstände anzusehen.

Vernetzungsmittel sind ein- oder mehrkernige phenolische Verbindungen, die zusätzlich mindestens jeweils zwei Hydroxymethylgruppen pro Molekül enthalten, wobei die Stellung der Substituenten unbedeutend ist. Beispiele für diese Verbindungen sind Di- oder Polyhydroxymethylphenole, -kresole, -xylole, -phenylphenole, -naphthole oder -bisphenole. Bevorzugte Vernetzungsmittel sind 2,6-Bis-(hydroxymethyl)-4-methylphenol oder di- oder polyhydroxymethylierte Bisphenole insbesondere tetrahydroxymethylsubstituiertes Bisphenol A oder Bisphenol F. Darüberhinaus eignen sich auch Resole, d. h. alkalisch kondensierte Umsetzungsprodukte aus Phenolen mit Aldehyden als erfindungsgemäße Vernetzungsmittel.

Die mehrkernigen, aromatischen Verbindungen und die Vernetzungsmittel werden im molaren Verhältnis von 1 : 0,8 bis 1 : 5 bevorzugt von 1 : 1 bis 1 : 2 eingesetzt, wobei durch Variation dieses Verhältnisses unterschiedliche Erweichungspunkte des Harzes gezielt angesteuert werden können. Die Umsetzung der mehrkernigen, aromatischen Verbindungen mit den hydroxymethylierten Phenolen wird katalysiert durch Di-oder Polycarbonsäuren (1-10 Gew.-% bezogen auf die Gesamtmenge der Reaktanden) wie z. B. Oxal-, Malon-, Bernstein-, Glutar-, Adipin-, Malein-, Phthal-, Wein-oder Citronensäure.

Die Herstellung der Harze erfolgt in einfacher Weise dadurch, daß die Reaktanden und der Katalysator miteinander vermischt werden und dieses Gemisch unter Rühren auf eine Temperatur im Bereich von 80-150 °C erhitzt und 1-300 min bei dieser Temperatur gehalten wird. Dabei können die Reaktionspartner in einem Lösemittel gelöst sein. Bevorzugt jedoch werden als mehrkernige aromatische Verbindungen Aromatengemische eingesetzt, die bei Reaktionstemperatur flüssig sind und die für die anderen Reaktionspartner als Lösemittel oder als flüssige Phase einer Dispersion der Reaktionspartner dienen. Bei dieser Umsetzung entstehen braune, harzartige Produkte, deren Erweichungspunkte je nach Wahl der Ausgangsprodukte und deren Mischungsverhältnis sowie je nach Kondensationsgrad im Bereich von 25 bis 200 °C liegen. Die Harze sind löslich in polaren Lösemitteln wie z. B. Dimethylformamid, Chinolin, Dioxan, Pyridin, Cyclohexanon oder Tetrahydrofuran.

Bei weiterem Erhitzen der Harze auf Temperaturen im Bereich von 120-350 °C erfolgt eine Härtung zu unschmelzbaren, unlöslichen Produkten, die in dicken Schichten geschäumt sind und die sich erst oberhalb 410 bis 460 °C zersetzen.

Für die Anwendung als hochtemperaturbeständige Beschichtung werden die erfindungsgemäßen Harze bevorzugt in Lösemitteln gelöst und ggf. mit weiteren, in der Lackindustrie üblichen Zusatzstoffen als Lack appliziert.

Für den Einsatz als Brandschutzbeschichtung werden bevorzugt die geschmolzenen, ungelösten Harze verwendet, die gegebenenfalls mit weiteren Flammschutzmitteln und/oder Füllstoffen gemischt als pastöse Massen aufgetragen werden.

## Beispiele

Beispiel 1

In eine Mischung von 219 g (1,2 mol) Phenanthren und 566 g (2,8 mol) Pyren werden 840 g (5 mol) 2,6-Bis-(hydroxy-methyl)-4-methyl-phenol sowie 79 g Oxalsäure-Dihydrat (4,9 Gew.-%) gegeben. Das Reaktionsgemisch wird bei 100 °C gerührt. Nach 10 min wird ein hellbraunes Harz erhalten mit einem Erweichungspunkt von 85 °C.

Durch 4stündiges, langsames Erhitzen auf 120-200 °C einer dünnen Schicht des Harzes auf einem Stahlblech wird das Harz gehärtet. Es entsteht eine gut haftende, unlösliche, unschmelzbare Beschichtung.

Beispiel 2

In 890 g Anthracenöl werden 1.026 (6,1 mol 2,6-Bis-(hydroxymethyl)-4-methyl-phenol sowie 94 g Oxalsäure-Dihydrat (4,9 Gew.-%) gegeben. Das Reaktionsgemisch wird bei 100 °C gerührt. Nach 8 Minuten wird ein Harz erhalten mit einem Erweichungspunkt von 74 °C.

Durch 4stündiges langsames Erhitzen auf 120-200 °C wird ein unlöslicher und unschmelzbarer Kunststoff gewonnen.

## Ansprüche

1. Verfahren zur Herstellung von hitzehärtenden Harzen, durch mit Säure katalysierte Vorkondensation von mehrkernigen, aromatischen Verbindungen mit aromatischen Vernetzungsmitteln, **dadurch gekennzeichnet**, daß als Vernetzungsmittel phenolische Verbindungen mit mindestens zwei Hydroxymethylgruppen eingesetzt werden.

2. Verfahren nach Anspruch 1, **dadurch gekennzeichnet**, daß als mehrkernige, aromatische Verbindung eine Verbindung oder ein Gemisch aus der Gruppe Naphthalin, Phenanthren, Anthracen, Pyren, Chrysen, Acenaphthen, Fluoren, Naphthacen, Fluoranthen, Perylen, Benzpyren, Benzperylen und deren Alkyl- und Dialkylderivaten eingesetzt wird, wobei die Alkylgruppen jeweils 1 bis 4 C-Atome haben.

3. Verfahren nach Anspruch 1, **dadurch gekennzeichnet**, daß als mehrkernige, aromatische Verbindungen Teer oder Pech eingesetzt werden.

4. Verfahren nach Anspruch 1, **dadurch gekennzeichnet**, daß als Säuren Di- oder Polycarbonsäuren mit bis zu 10 C-Atomen eingesetzt werden.

5. Verfahren nach den Ansprüchen 1-4, **dadurch gekennzeichnet**, daß als Vernetzungsmittel 2,6-Bis-(hydroxymethyl)-4-methylphenol eingesetzt wird.

6. Verfahren nach den Ansprüchen 1-4, **dadurch gekennzeichnet**, daß als Vernetzungsmittel di- oder polyhydroxymethyliertes Bisphenol eingesetzt wird.

7. Verfahren nach den Ansprüchen 1-4, **dadurch gekennzeichnet**, daß als Vernetzungsmittel ein Resol eingesetzt wird.

8. Verfahren nach den Ansprüchen 1-7, **dadurch gekennzeichnet**, daß als Säure eine aliphatische Dicarbonsäure aus der Gruppe Oxal-, Malon-, Bernstein-, Malein-, Fumar- oder Weinsäure eingesetzt wird.

9. Verfahren nach den Ansprüchen 1-8, **dadurch gekennzeichnet**, daß mehrkernige, aromatische Verbindung(en) und phenolische Verbindung(en) mit je mindestens zwei Hydroxymethylgruppen im molaren Verhältnis von 1 : 0,8 bis 1 : 5 sowie 1-10 Gew.-% bezogen auf die Gesamtmenge der Reaktanden an Di-oder Polycarbonsäure miteinander vermischt und bei einer Temperatur im Bereich von 90-180 °C kondensiert werden.

10. Hitzehärtende Harze, hergestellt nach Verfahren gemäß einem der Ansprüche 1-9.

11. Verwendung der hitzegehärtenden Harze nach Anspruch 10, ggf. zusammen mit weiteren Zusatzstoffen als hochtemperaturbeständige Beschichtung.

12. Verwendung der hitzegehärtenden Harze nach Anspruch 10, ggf. zusammen mit weiteren Füll- und Zusatzstoffen als Brandschutzbeschichtung.